# EUROPEAN PATENT SPECIFICATION

(11) **EP 1 875 849 B1**
(45) Date of publication and mention of the grant of the patent: **23.04.2014**
(21) Application number: 07252730.2
(22) Date of filing: 06.07.2007
(51) Int. Cl.: A47L 9/24

(54) **Wand arrangement for vacuum cleaner**
Stabanordnung für einen Staubsauger
Agencement de bras de repérage pour aspirateur

(30) Priority: 08.07.2006 GB 0613620
(43) Date of publication of application: 09.01.2008
(73) Proprietor: HOOVER LIMITED, Merthyr Tydfil, Mid Glamorgan CF48 1PQ (GB)
(72) Inventor: Smith, David Benjamin, Glasgow, G42 9XW (GB)
(74) Representative: Davies, Gregory Mark

(56) References cited:
- WO-A-02/18802
- GB-A- 2 200 402
- US-A- 2 643 143
- US-A- 4 706 916
- US-A1- 2005 186 028

## Description

The present invention relates to a wand arrangement for a vacuum cleaner. More particularly the invention relates to a telescopic wand arrangement.

Vacuum cleaners having telescopic wands are known in the art. GB 2416679 discloses an upright vacuum cleaner equipped with a telescopic wand assembly that allows the length of the wand to be adjusted in order to meet the needs of different cleaning situations. The wand assembly includes a first wand section, a second wand section, a wand lock for securing the two wand sections together and a trigger actuator for operating the wand lock. The trigger actuator is located remote from the wand lock on the wand assembly. A linkage including a crank and a link arm connects the actuator to the wand lock. Pulling the actuator rotates the crank, which is connected to the link arm, and releases the wand lock to allow the wand assembly to be lengthened or shortened as desired.

JP 2003-33311 discloses a vacuum cleaner having a trigger switch and a link mechanism consisting of a rotating connection plate, a first connecting bar and a second connecting bar.

JP 2001-70211 discloses a vacuum cleaner including a trigger switch structure which enables adjustment of the length of a connecting pipe.

GB2200402 discloses a clamping device for attaching a first telescopic member 8 to a second telescopic member 12 through the activation of a lever 17 which moves rod 18 for moving cones 3, 4 which allows relative movement between the first and second telescopic members.

An improved arrangement has now been devised.

The present invention provides a wand arrangement for a vacuum cleaner, as defined in claim 1.

The present invention provides the benefit of the handle portion being detachable from the first wand element allowing the user the option of directly connecting the handle portion to other implements such as a suction nozzle. The detachment of the handle portion from the first wand element is achieved by the detachable linkage means.

The wand arrangement of the present invention also has the advantage that the force is transmitted entirely in a single push direction by the linkage means to release the catch, The wand arrangement thus does not require a crank to change the direction of transmittal of the force and comprises a simple and more compact mechanical construction.

The wand arrangement comprises a handle portion, facilitating control of the wand arrangement by the user.

The actuator is positioned on the handle portion allowing for ease of operation.

The linkage means comprises two detachably connected elongate members, the first elongate member being connected to the handle portion and the second elongate member being connected to a wand element.

Preferably the first elongate member does not extend beyond the handle portion so that on detachment of the handle portion from the wand element the elongate member does not extend from the handle portion. This avoids causing a hazard to the user and the elongate member being vulnerable to breakage. Preferably the first elongate member is resiliently biased, for example by spring means, towards the actuator.

The end of the first elongate member, which connects with the second elongate member, preferably has a forked end, advantageously providing a secure but detachable connection between the first and second elongate members of the linkage means so the handle portion can be easily detached from the wand element.

The handgrip may extend over the actuator enabling an operator to grip the handle portion and activate the actuator with the same hand.

The invention also relates to a vacuum cleaner including a wand arrangement as herein described.

An exemplary embodiment of the invention will now be described with reference to the accompanying drawings, in which:
Figure 1 shows a side view of a wand assembly in accordance with the invention.
Figure 2 shows a wand assembly with the linkage means and catch exposed.
Figure 3 shows an enlarged view of the handle portion with the linkage means exposed.
Figures 4 and 5 schematically show the operation of the catch.

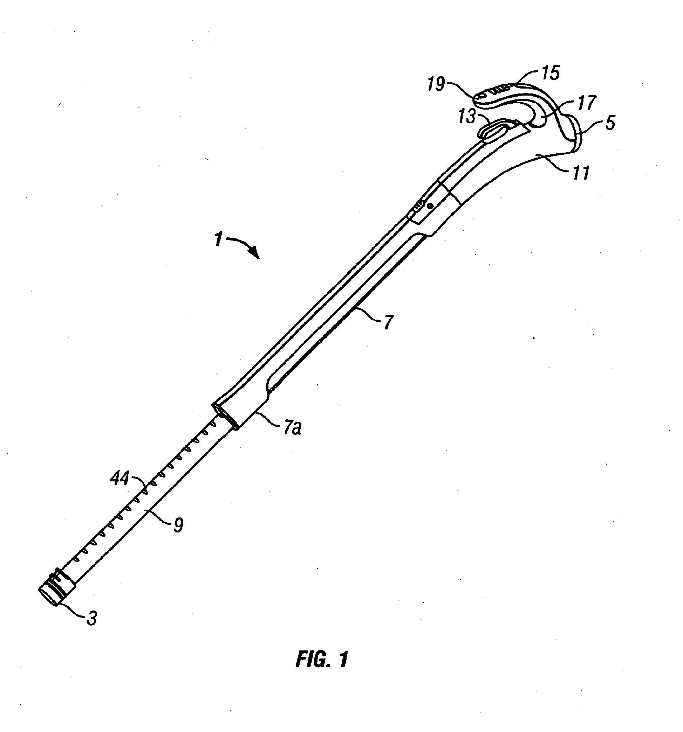

As illustrated in figure 1 the present invention relates to a wand assembly 1 for a vacuum cleaner. One end of the wand assembly 3 is for connection to a nozzle assembly (not shown) whilst the other end 5 is for connection to a flexible conduit (not shown) which is in fluid communication with the body of the vacuum cleaner (not shown). The vacuum cleaner may be a canister or upright cleaner.

The wand assembly comprises a first wand element 7 and a second wand element 9. The second wand element 9 is telescopically received in the first wand element 7. The first and second wand elements are fixed in position relative to each other by a catch 25 housed within the end 7a of the first wand element 7.

The wand assembly further comprises a handle portion 11 connected to the first wand element 7. Actuator 13 is mounted on the handle portion 11 and is thus positioned remote from the catch. Actuator 13 is in the form of a lever arranged to push the linkage means towards the catch and actuate the catch to release the catch and permit relative telescopic extension or retraction of the wand element 9 with respect to the first wand element 7.

Handgrip 15 is also mounted on the handle portion 11. The handgrip 15 is connected at one end 17 to the handle portion 11 whilst the other end 19 is free. The handgrip extends over the actuator 13 allowing the operator to grasp the handgrip with the thumb and palm of the hand whilst also being able to simultaneously activate the actuator 13 with the fingers of the same hand.

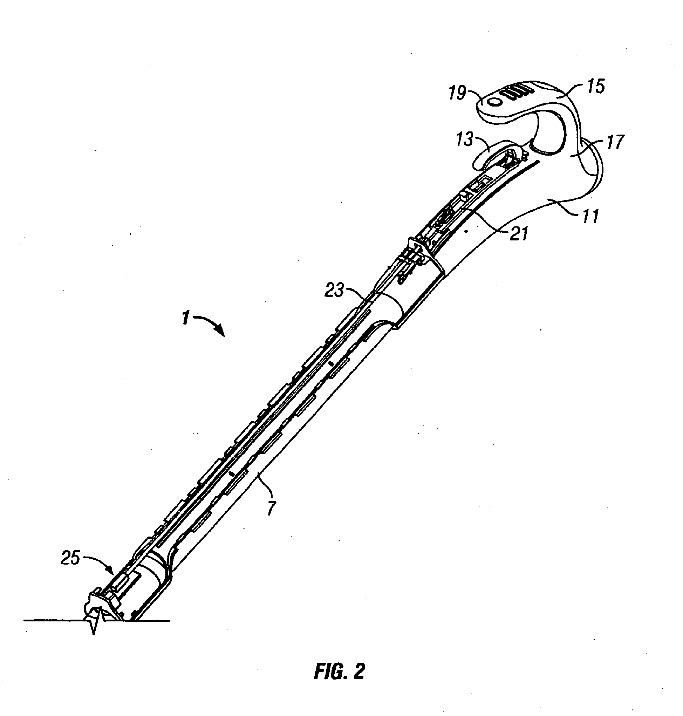

Figure 2 gives an exposed view of the connection between the actuator 13 and the catch 25. The linkage means extending between the actuator and the catch 25 comprises a first elongate rigid member 21 and a second elongate rigid member 23. The first member 21 is in engagement with the actuator 13 whilst the second member 23 is connected to the catch 25.

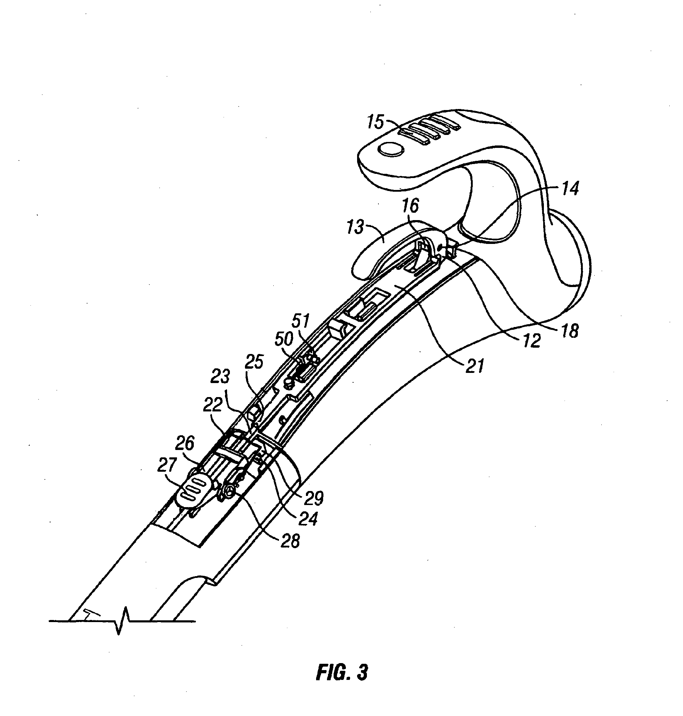

Referring further to figure 3, the actuator 13 is pivotally connected to handle portion 11 by pin 14 which extends through the actuator and through an upstanding part 16 of the handle portion. Cam portion 12 of the actuator 13 engages with linkage member 21 and has a cut-away part into which the end linkage member 21 extends. Stop-means 18 ensures that, when not in use, the actuator 13 is maintained in a graspable position by limiting the anti-clockwise pivoting of the actuator about pin 14.

The first linkage member 21 has a V-shaped forked end 25 at its end distal from the actuator 13. The second linkage member 23 extends into the forked end providing an easily releasable but reliable engagement with the second linkage member 23.

Locking element 26 is pivotally connected to wand element 7 about axis 28 and attaches the first wand element 7 and the handle portion 11 together. Locking element 26 comprises a press button 27 at one end and flange portion 29 at the other end. Flange portion 29 extends over and engages with protrusion 24 on handle portion 11 to attach the wand element to the handle portion. Spring 22 biases the flange portion 29 into engagement with protrusion 24.

On depression of the press button 27 the locking element 26 pivots about axis 28 against the biasing force of the spring 22 to release the flange portion from engagement with protrusion 24. The handle portion 11 can then easily be detached from the wand element 7, without requiring further operator intervention, as the second linkage member simply disengages from the forked end of first linkage member 21. On release of the press button 27 the bias action of spring 22 returns the locking element to its original position.

Tension spring 50 is connected to first linkage member 21 and protrusion 51 extending from handle portion 11. On detachment of the handle portion from the first wand element, the spring 50 acts to retract the first linkage member 21 towards the actuator 13. The first linkage member 21 thus does not extend beyond the handle portion 11 on detachment of the handle portion 11 from the first wand element 7. This reduces the likelihood of the linkage member being damaged or broken. Any item for direct connection to the handle portion also does not need to have means for receiving the first linkage member 21.

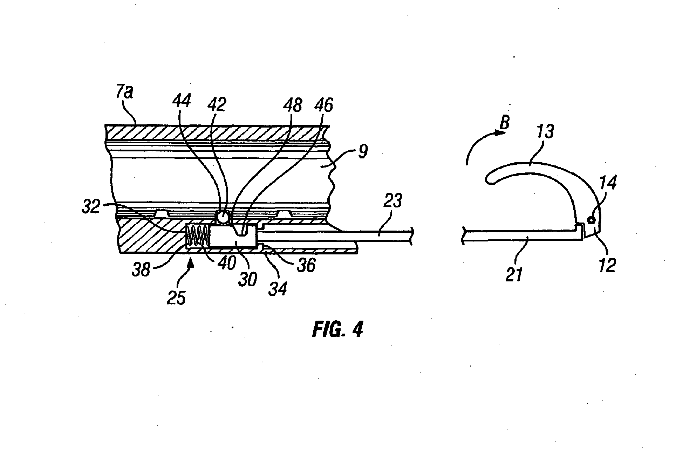

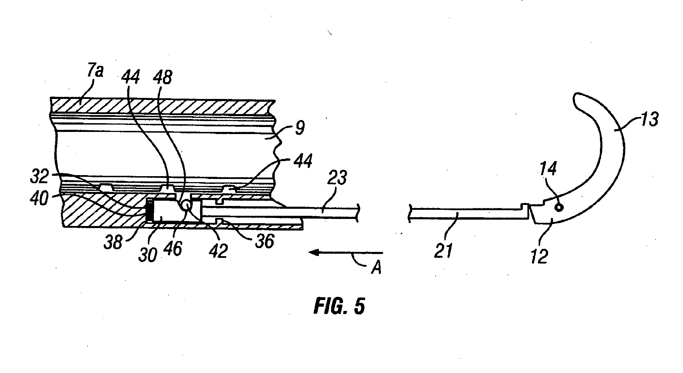

A variety of remotely operable catch arrangements are envisaged as suitable for putting the invention into operation. It is preferable that the catch arrangement is resiliently biased to normally tend to be configured to a locked or home position. An exemplary embodiment is shown in figures 4 and 5. As illustrated schematically in figure 4 the catch actuator 30 is received for sliding movement in a chamber 38 formed in the end 7a of the first wand element. The chamber 38 comprises an end wall 32, an outer wall 34 and stop 36. A coil spring 40 biases the catch actuator 30 towards the stop 36 in a home position. In the home position the catch actuator 30 engages a locking pin 42 and holds the pin in one of the plurality of locking notches 44 formed in the wall of the second wand element 9, thereby securing the wand elements 7,9 together in a selected position.

On activation the operator lifts the lever-action actuator 13 towards the handgrip 15 in the direction of arrow B. The actuator rotates clock-wise about pivot 14 and the cam portion 12 of the actuator engages the linkage member 21 and slides the linkage member 21 from its first position and towards the catch 25, to a second position in the direction of arrow A (see figure 5). The first linkage member 21 in turn moves the second linkage member 23 towards the catch in the direction of arrow A. The catch actuator 30 is moved against the biasing force of the spring 40 towards the end wall 32. As a result of this movement, the slot 46 in the actuator 30 is aligned over the locking pin 42.

As the operator moves the wand element 9 relative to the wand element 7 in order to retract or extend the wand assembly as desired, the locking pin 42 rides up the sloped sidewall of the notch 44 and retracts into the slot 46 in the catch actuator 30. With the locking pin 42 free of the notch 44, the wand element 9 moves freely relative to the wand element 7 and the wand assembly may be lengthened or shortened as desired to meet the operator's needs for any particular cleaning situation.

Once the wand assembly has been extended or retracted to the desired position, the operator lowers the actuator 13 to its original position. The spring 40 then biases the catch actuator 30 back towards the stop 36 and its home position. The sloped cam surface 48 in the slot 46 functions to force the locking pin 42 down into the new notch 44 now aligned with it. As this occurs, the catch actuator 30 continues to slide in the direction opposite to that indicated by arrow A until the pin 42 is captured in the notch 44 by the actuator as illustrated in figure 5a. In this position the wand elements 7,9 may not be lengthened or shortened until the actuator 13 is again manipulated to release the catch in the manner previously described.

It is to be understood that modifications and variations of the present invention will become apparent to those skilled in the art and it is intended that all such modifications will be included within the scope of the present invention as defined in the claims.

## Claims

1. A wand arrangement for a vacuum cleaner comprising:
a first wand element (7);
a second wand element (9) mounted to move telescopically with respect to the first wand element (7);
a releasable catch (25) arranged to secure the wand elements;
an actuator (13) for operating the catch (25), positioned at a location spaced from the catch (25); and
a linkage means extending from the catch (25) to the actuator (13),
further comprising a handle portion (11) connected to the first wand element;
wherein the actuator (13) comprises a pivoted lever (13), and in operation the pivoted lever push-drives the linkage means in a release direction to move the linkage means from a first position in which the catch (25) is engaged to a second position in which the catch (25) is released;
**characterised in that** the handle portion is detachably connected to the first wand element and the actuator (13) is positioned on the handle portion (11);
wherein the linkage means comprises two detachably connected rigid elongate members, (21, 23) the two elongate members (21,23) extending between the catch (25) and the actuator (13), the first member (21) being in engagement with the actuator (13) and the second member (23) being connected to the catch (25).

2. A wand arrangement according to claim 1, wherein the actuator (13) comprises a cam-portion which directly engages the linkage means.

3. A wand arrangement according to claim 1, wherein the first wand element (7) comprises a locking element engageable with the handle portion (11).

4. A wand arrangement according to claim 1, wherein the first elongate member (21) does not extend beyond the handle portion.

5. A wand arrangement according to claim 1, wherein the end of the first elongate member (21), which connects with the second elongate member (23), is forked.

6. A wand arrangement according to any preceding claim, wherein the handle portion (11) has a handgrip extending from the handle portion towards the catch (25).

7. A wand arrangement according to claim 6, wherein the handgrip is connected at one end to the handle portion (11) and is free at the other end.

8. A wand arrangement according to any of claims 5 - 7, wherein the handgrip extends over the trigger.

9. A vacuum cleaner including a wand arrangement in accordance with any of the preceding claims.

## Patentansprüche

1. Stabanordnung für einen Staubsauger, umfassend:
ein erstes Stabelement (7),
ein zweites Stabelement (9), das so montiert ist, dass es sich teleskopisch bezüglich des ersten Stabelements (7) bewegt,
eine freigebbare Raste (25), die zur Befestigung der Stabelemente angeordnet ist,
ein Stellglied (13) zur Betätigung der Raste (25),
das an einem von der Raste (25) beabstandeten Ort positioniert ist, und
ein Gestängemittel, das sich von der Raste (25) zu dem Stellglied (13) erstreckt,
ferner umfassend einen Griffabschnitt (11), der mit dem ersten Stabelement verbunden ist,
wobei das Stellglied (13) einen Schwenkhebel (13) umfasst, der das Gestängemittel im Betrieb in eine Freigaberichtung schiebend antreibt, um das Gestängemittel aus einer ersten Position, in der die Raste (25) eingerückt ist, in eine zweite Position, in der die Raste (25) freigegeben ist, zu bewegen,
**dadurch gekennzeichnet, dass** der Griffabschnitt trennbar mit dem ersten Stabelement verbunden ist und das Stellglied (13) am Griffabschnitt (11) positioniert ist,
wobei das Gestängemittel zwei trennbar verbundene starre längliche Elemente (21, 23) umfasst, wobei sich die beiden länglichen Elemente (21, 23) zwischen der Raste (25) und dem Stellglied (13) erstrecken, wobei das erste Element (21) mit dem Stellglied (13) in Eingriff steht und das zweite Element (23) mit der Raste (25) verbunden ist.

2. Stabanordnung nach Anspruch 1, wobei das Stellglied (13) einen Nockenabschnitt umfasst, der das Gestängemittel direkt in Eingriff nimmt.

3. Stabanordnung nach Anspruch 1, wobei das erste Stabelement (7) ein Verriegelungselement umfasst, das mit dem Griffabschnitt (11) in Eingriff gebracht werden kann.

4. Stabanordnung nach Anspruch 1, wobei sich das erste längliche Element (21) nicht über den Griffabschnitt hinaus erstreckt.

5. Stabanordnung nach Anspruch 1, wobei das Ende des ersten länglichen Elements (21), das mit dem zweiten länglichen Element (23) verbunden ist, gegabelt ist.

6. Stabanordnung nach einem der vorhergehenden Ansprüche, wobei der Griffabschnitt (11) einen Handgriff hat, der sich vom Griffabschnitt zu der Raste (25) hin erstreckt.

7. Stabanordnung nach Anspruch 6, wobei der Handgriff an einem Ende mit dem Griffabschnitt (11) verbunden ist und am anderen Ende frei ist.

8. Stabanordnung nach einem der Ansprüche 5 - 7, wobei sich der Handgriff über den Auslöser erstreckt.

9. Staubsauger, der eine Stabanordnung nach einem der vorhergehenden Ansprüche aufweist.

## Revendications

1. Agencement de tube-rallonge pour un aspirateur, comprenant :
un premier élément de tube-rallonge (7) ;
un deuxième élément de tube-rallonge (9) monté de manière à se déplacer de manière télescopique par rapport au premier élément de tube-rallonge (7) ;
un taquet libérable (25) prévu pour fixer les éléments de tube-rallonge ;
un actionneur (13) pour actionner le taquet (25), positionné à un emplacement espacé du taquet (25) ; et
un moyen de liaison s'étendant depuis le taquet (25) jusqu'à l'actionneur (13),
comprenant en outre une portion de poignée (11) connectée au premier élément de tube-rallonge ;
l'actionneur (13) comprenant un levier pivoté (13), et, lors de l'actionnement, le levier pivoté entraînant par poussée le moyen de liaison dans une direction de libération pour déplacer le moyen de liaison d'une première position dans laquelle le taquet (25) est engagé dans une deuxième position dans laquelle le taquet (25) est libéré ;
**caractérisé en ce que** la portion de poignée est connectée de manière détachable au premier élément de tube-rallonge et l'actionneur (13) est positionné sur la portion de poignée (11) ;
le moyen de liaison comprenant deux organes allongés rigides connectés de manière détachable (21, 23), les deux organes allongés (21, 23) s'étendant entre le taquet (25) et l'actionneur (13), le premier organe (21) étant engagé avec l'actionneur (13) et le deuxième organe (23) étant connecté au taquet (25).

2. Agencement de tube-rallonge selon la revendication 1, dans lequel l'actionneur (13) comprend une portion de came qui s'engage directement avec le moyen de liaison.

3. Agencement de tube-rallonge selon la revendication 1, dans lequel le premier élément de tube-rallonge (7) comprend un élément de verrouillage pouvant être engagé avec la portion de poignée (11).

4. Agencement de tube-rallonge selon la revendication 1, dans lequel le premier organe allongé (21) ne s'étend pas au-delà de la portion de poignée.

5. Agencement de tube-rallonge selon la revendication 1, dans lequel l'extrémité du premier organe allongé (21) qui se raccorde au deuxième organe allongé (23) est fourchue.

6. Agencement de tube-rallonge selon l'une quelconque des revendications précédentes, dans lequel la portion de poignée (11) a une partie de préhension s'étendant depuis la portion de poignée jusqu'au taquet (25).

7. Agencement de tube-rallonge selon la revendication 6, dans lequel la partie de préhension est connectée par une extrémité à la portion de poignée (11) et est libre à l'autre extrémité.

8. Agencement de tube-rallonge selon l'une quelconque des revendications 5 à 7, dans lequel la partie de préhension s'étend par-dessus la gâchette.

9. Aspirateur comportant un agencement de tube-rallonge selon l'une quelconque des revendications précédentes.
